# EUROPÄISCHE PATENTSCHRIFT

(11) **EP 2 321 091 B1**
(45) Veröffentlichungstag und Bekanntmachung des Hinweises auf die Patenterteilung: **16.10.2013**
(21) Anmeldenummer: 09777910.2
(22) Anmeldetag: 17.08.2009
(51) Int. Cl.: B24B 5/42, B23D 77/02, B24B 33/02, B24B 33/08

(54) **VORRICHTUNG UND VERFHAREN ZUR BEARBEITUNG EINES LAGERSITZES ODER EINES DARIN GELAGERTEN LAGERZAPFENS**
DEVICE AND METHOD FOR MACHINING A BEARING SEAT OR A BEARING JOURNAL SUPPORTED THEREIN
DISPOSITIF ET PROCÉDÉ D'USINAGE D'UN SIÈGE DE PALIER OU D'UN TOURILLON MONTÉ DANS CELUI-CI

(30) Priorität: 10.09.2008 DE 102008046642
(43) Veröffentlichungstag der Anmeldung: 18.05.2011
(73) Patentinhaber: MAN DIESEL & TURBO, FILIAL AF MAN DIESEL & TURBO SE, TYSKLAND, 2450 København SV (DK)
(72) Erfinder: PETERSEN, Arne Kvistgaard, DK-2791 Dragor (DK)
(74) Vertreter: Munk, Ludwig
(86) Internationale Anmeldenummer: PCT/EP2009/005938
(87) Internationale Veröffentlichungsnummer: WO 2010/028733

(56) Entgegenhaltungen:
- GB-A- 2 045 126
- US-A- 2 167 311
- US-A- 2 245 820
- US-A- 5 749 774
- US-A- 6 113 471

## Beschreibung

Die Erfindung betrifft eine Vorrichtung und ein Verfahren zur spanabhebenden Bearbeitung einer zylindrischen Auflagefläche eines Lagersitzes oder eines darin gelagerten Lagerzapfens bei ausgebautem Lager mit zumindest einem in rotatorischer Schnittbewegung in dem durch Ausbau des Lagers entstandenen Spalt bewegbaren Schneidwerkzeug gemäß den Oberbegriffen der Ansprüche 1, 2 sowie 9. Die Erfindung eignet sich besonders zur Bearbeitung von mittels relativ schmaler Radiallagerschalen gleitgelagerten Wellen, wie beispielsweise Kurbelwellen von Zweitakt-Großdieselmotoren.

Bei Motoren und anderen mechanischen Baueinheiten, in denen relativ schnell drehende Wellen bei einer hohen Betriebstemperatur rundgeführt werden müssen, insbesondere bei Zweitakt-Großdieselmotoren, wie sie als Schiffs- oder Kraftwerksmotoren eingesetzt werden, kommt es immer wieder vor, dass ein Lager frisst, insbesondere wenn, wie bei vorstehend genannten Großdieselmotoren zumeist der Fall, als Gleitlager-Lagerschalen bzw. Zweihälfte-Lagerschalen eingesetzt werden, um die Welle an verschiedene Lagerzapfen gleitzulagem. Dabei kommt es vor, dass die Lagerschale bzw. eine der Lagerhalbschalen an der Welle, in den meisten Anmeldungsfällen der Erfindung an der Kurbelwelle, hängen bleibt und mit der Welle durchdreht. In diesem Fall kommt es zu einer starken Wärmeentwicklung, welche zu einer lokalen Gefügeänderung, Mikrorissen und Verformung des den Lagerzapfen umgebenden Lagersitzes, meist in der unteren Hälfte, also am Lagersattel führt und zu weiteren schweren Beschädigungen der entsprechenden Oberfläche aufgrund von Schleifspuren und Anschweißungen der durchdrehenden Lagerschale kommt. Ferner kann es auch vorkommen, dass der Ölfilm zwischen der Lagerschale und dem Lagerzapfen abreißt bzw. zerstört wird. Auch in diesem Fall kann es zu einer die vorstehend genannten Beschädigungen hervorrufenden Hitzeentwicklung kommen.

Bei dicken Lagerschalen ist es daher bekannt, nach Entnahme der Lagerschale ein Werkzeug in den dadurch gebildeten Spalt zwischen dem Kurbelwellenlagerzapfen und dem Lagersitz einzubringen, welches über einen Kettentrieb durch einen externen Motor angetrieben wird und um den Lagerzapfen rotiert. Das Werkzeug besteht aus einem Käfig mit einem Schieber, welcher einen Drehmeißel bei jeder Rotation ein Stück weit in Axialrichtung bewegt.

Dieses Werkzeug kann aber von seiner Bauform her nur bei relativ breiten Lagerspalten eingesetzt werden. So ist beispielsweise bei den vorstehend angesprochenen Großdieselmotoren, wie sie als Schiffsdiesel oder in Kraftwerken eingesetzt werden, mit dicken Lagerschalen ca. 25 bis 50 mm Platz zwischen Kurbelwelle und Lagersitz, wohingegen bei dünnen Lagerschalen lediglich zwischen ca. 7 bis 20 mm Platz ist, in den ein solches Werkzeug nicht eingebracht werden kann.

In vielen Fällen ist es daher nötig, die Kurbelwelle aus dem Motor zu entnehmen, um genug Platz für die Bearbeitung des Lagerzapfens oder des Lagersitzes zu haben. Bei den angesprochenen Großdieselmotoren werden dafür einige Monate benötigt, weil dafür große Teile des Maschinenraums freigelegt werden müssen und ein Loch in die Schiffsseite oder in die Kraftwerkswand geschnitten werden muss, um genügend Raum zur Entnahme der Kurbelwelle bereitzustellen.

Die deutsche Patentanmeldung DE 37 16 058 A1 offenbart die Bearbeitung eines Lagerzapfens eines Gleitlagers im eingebauten Zustand der Kurbelwelle. Das Gleitlager weist dabei einen geteilten Lagersitz mit einem abnehmbaren Lagerdeckel auf. Zur Bearbeitung des Lagerzapfens wird der Lagerdeckel abgenommen und ein als zweigeteilte Bearbeitungsschale ausgebildetes Werkzeug in den durch Entnahme der Lagerschalen entstandenen Lagerspalt eingebracht. Die zweigeteilte Bearbeitungsschale wird dann über eine in den Lagerdeckel eingelegte Druckfederanordnung, oder weitere Druckfedern im Inneren des Lagerdeckels gegen den Lagerzapfen gepresst. Die Bearbeitungsschale weist dabei Schleifsteine auf, mit denen der Lagerzapfen bei Drehung der Welle abgeschliffen wird.

Die US-Patentschrift US 2,167,311 offenbart ferner ein Werkzeug und ein Verfahren zur Bearbeitung der Auflagefläche eines Lagerzapfens gemäß den Oberbegriffen der Ansprüche 2 und 9, welches ein halbzylindrisches Element aufweist, das an seiner Innenoberfläche körniges, abrasives Material angeklebt hat. Das Werkzeug als Ganzes ist durch Formschluss mit dem Lagersattel verbunden, und zwar durch einen Zapfen, welcher in Eingriff mit einer Ausnehmung eines zugeordneten Lagerelements steht.

Die US-Patentschrift US 6,113,471 offenbart ebenfalls ein Schleifelement zur Bearbeitung der Auflagefläche eines Lagerzapfens. Dort sind Zapfen an den Lagerschalenhälften vorgesehen, welche formschlüssig in Eingriff mit Aussparungen an dem Schleifelement stehen.

Die US-Patentschrift US 2,245,820 offenbart ebenfalls einen Schleifeinsatz zur Bearbeitung der Auflagefläche eines Lagerzapfens. Der Schleifeinsatz hat eine Trägerschale mit einem Abstandsstück, an dem es mit den Lagerschalenhälften verschraubt ist.

Die UK-Patentschrift GB 2 045 126 A offenbart eine Vorrichtung gemäß dem Oberbegriff des Anspruchs 1.

Der Erfindung liegt daher die Aufgabe zugrunde, eine Vorrichtung der eingangs beschriebenen Art derart weiterzubilden, dass die Bearbeitung von Auflageflächen an einem Lagersitz oder an einem Lagerzapfen vereinfacht wird.

Diese Aufgabe wird hinsichtlich der Vorrichtung mit den Merkmalen des Anspruchs 1 bzw. 2 gelöst, hinsichtlich des Verfahrens mit den Merkmalen des Anspruchs 9.

Zur Bearbeitung einer zylindrischen Auflagefläche eines Lagersitzes einer rundgeführten Welle bei ausgebautem Lager ist erfindungsgemäß eine Vorrichtung mit zumindest einen in dem durch Ausbau des Lagers entstandenen Spalt zwischen dem Lagersitz und einem darin aufgenommenen Lagerzapfen entlang der Auflagefläche des Lagersitzes gegenüber dem Lagersitz drehbewegbaren Schneidwerkzeug vorgesehen, welche neben dem Schneidwerkzeug eine Befestigungseinrichtung zum Befestigen des Schneidwerkzeugs an dem Lagerzapfen aufweist, die so eingerichtet ist, dass bei Bearbeitung der Auflagefläche des Lagersitzes der Lagerzapfen als rotierender Werkzeugträger dient und das Schneidwerkzeug in einer rein rotatorischer Schnittbewegung an der Auflagefläche des Lagersitzes entlang geführt wird. Dabei ist die Befestigungseinrichtung zur rückstands- und zerstörungsfrei wieder lösbaren Befestigung des Schneidwerkzeugs am Lagerzapfen im Kraft- und/oder Stoffschluss eingerichtet und weist für das Werkzeug eine Klebeschicht auf, um das Werkzeug stoffschlüssig mit der Auflagefläche am Lagerzapfen zu verbinden. Ergänzend oder alternativ wäre die Verwendung von Schlauchschellen oder ähnlichen umlaufenden Befestigungsmitteln denkbar, um das Werkzeug an dem Lagerzapfen zu befestigen.

Vorteilhaft ist damit auch bei einem engen Lagerspalt bzw. bei einem dünnen Lagerring eine Bearbeitung der Auflagefläche am Lagersitz möglich, ohne dass die Welle dafür entnommen werden muss. Mit der erfindungsgemäßen Vorrichtung lässt sich somit ein Verfahren umsetzen, bei dem eine derartige Vorrichtung zur Bearbeitung der Auflagefläche am Lagersitz an dem Lagerzapfen aufgeklebt und/oder mit der Schlauchschelle befestigt wird und danach die Welle gedreht wird.

Gemäß eines weiteren Aspekts der Erfindung kann auch die zylindrische Auflagefläche am Lagerzapfen auf ganz ähnliche Art bearbeitet werden. Dafür ist erfindungsgemäß eine Vorrichtung vorgesehen, welche zumindest ein in dem durch Ausbau des Lagers entstandenen Spalt zwischen einem Lagersitz und dem darin aufgenommenen Lagerzapfen entlang der Auflagefläche des Lagerzapfens gegenüber dem Lagerzapfen drehbewegbares Schneidwerkzeug aufweist, sowie eine Befestigungseinrichtung zum Befestigen des Schneidwerkzeugs an dem Lagersitz, die so eingerichtet ist, dass bei Bearbeitung der Auflagefläche des Lagerzapfens die Welle als Drehspindel dient und der Lagersitz als nichtrotierender Werkzeugträger, und das befestigte Schneidwerkzeug in einer rein rotatorischen Schnittbewegung an der Auflagefläche des gedrehten Lagerzapfens entlang geführt wird. Mit dieser erfindungsgemäßen Vorrichtung lässt sich ein Verfahren umsetzen, bei dem eine derartige Vorrichtung zur Bearbeitung der Auflagefläche am Lagerzapfen an dem Lagersitz befestigt wird und danach die Welle gedreht wird. Dabei ist die Befestigungseinrichtung zur rückstands- und zerstörungsfrei wieder lösbaren Befestigung des Schneidwerkzeugs am Lagersitz im Kraft- und/oder Stoffschluss eingerichtet und weist für das Werkzeug eine Klebeschicht auf, um das Werkzeug stoffschlüssig mit der Auflagefläche am Lagersitz zu verbinden. Ergänzend oder alternativ wäre die Verwendung von Schlauchschellen oder ähnlichen umlaufenden Befestigungsmitteln denkbar, um das Werkzeug an dem Lagersitz zu befestigen.

Die Erfindung eignet sich dabei zur Bearbeitung aller Arten von Lagersitzen und Lagerzapfen, bei denen ein Ausbau der rundgeführten Welle schwierig ist und wenig Platz im durch Ausbau des Lagers vorhandenen Spalt vorhanden ist. Insbesondere eignet sich das Verfahren bzw. die Vorrichtung jedoch zur Bearbeitung von gleitgelagerten Wellen, da Gleitlager häufig als Zweihälften-Lagerschalen ausgeführt sind, so dass ein Ausbau der Lagerschale oder zumindest einer Lagerschalenhälfte auf einfache Weise möglich ist, ohne dass dafür die Welle entnommen werden muss. Weiterhin eignet sich die Vorrichtung bzw. das Verfahren gemäß der Erfindung besonders für geteilte Lagersitze, bei denen der Lagersitz in einen Lagersattel und einen Lagerdeckel geteilt ist. Denn dann kann auf einfache Weise, meist durch Lösen von Spannbolzen, mit denen der Lagerdeckel am Lagersitz befestigt ist, der Lagerdeckel abgenommen werden, um die erfindungsgemäße Vorrichtung an der dadurch zugänglich gemachten Welle bzw. an dem dadurch zugänglich gemachten Lagerzapfen zu befestigen, um den Lagersattel - oder nach erneutem Aufsetzen des Lagerdeckels - den Lagerdeckel zu bearbeiten. Ferner kann die erfindungsgemäße Vorrichtung auch am Lagerdeckel bzw. an der z.B. innenzylindrischen Auflagefläche des Lagerdeckels befestigt werden, um nach erneutem Aufsetzen des Lagerdeckels die Auflagefläche am Lagerzapfen bzw. an der Welle zu bearbeiten.

Derartige geteilte Lager und Lagerschalen sind besonders häufig bei großen Zweitakt-Dieselmotoren anzutreffen, wie sie als Schiffsdiesel oder in Kraftwerken eingesetzt werden. Dort können besonders große Vorteile durch Einsatz des erfindungsgemäßen Verfahrens bzw. der erfindungsgemäßen Vorrichtung erzielt werden. Denn die zur Reparatur des Schiffsmotors nötige Zeit sinkt drastisch, wenn die Kurbelwelle nicht ausgebaut werden muss, um den Lagersitz oder den Lagerzapfen zu bearbeiten. Damit sinkt auch der Wert des Schiffes, ab dem sich eine derartige Reparatur überhaupt noch lohnt, was letztlich zu einer Verlängerung der wirtschaftlichen Lebensdauer eines Schiffes führen kann.

Vorteilhafte Weiterbildungen sind Gegenstand der übrigen Unteransprüche.

Wird die Welle bei an dem Lagerzapfen befestigten Werkzeug gedreht, so gerät dieses in eine rein rotatorische Schnittbewegung, wenn der Abstand zwischen dem Werkzeug und der zu bearbeitenden Auflagefläche am Lagersattel (oder Lagerdeckel) richtig eingestellt ist. Dazu ist es vorteilhaft, wenn die Vorrichtung eine Einstelleinrichtung zur Einstellung des Abstands des Werkzeugs von der zu bearbeitenden Auflagefläche bzw. des Abstands des Werkzeugs von der Auflagefläche, an der es befestigt ist, aufweist. Bei der Bearbeitung der Auflagefläche am Lagerdeckel oder, bei einem an der Auflagefläche des Lagerdeckels befestigten Werkzeug zur Bearbeitung der Auflagefläche am Lagerzapfen, bietet sich ferner die Möglichkeit, den Abstand zwischen Werkzeug und zu bearbeitender Auflagefläche dadurch einzustellen, dass nach Aufsetzen des Lagerdeckels die Lagerbolzen, mit denen der Lagerdeckel mit dem Lagersattel verbunden ist, auf das gewünschte Maß angezogen werden, um so den Abstand zwischen Werkzeug und zu bearbeitender Oberfläche richtig einzustellen.

Als Werkzeug kommen dabei verschiedene Metallbearbeitungswerkzeuge in Betracht. Selbstverständlich ist es auch möglich, mehrere Werkzeuge an dem als Werkzeugträger fungierenden Lagerzapfen (bei der Bearbeitung des Lagersitzes) oder Lagersitz bei der Bearbeitung des Lagerzapfens zu befestigen.

So wäre es beispielsweise denkbar, eine oder zwei Reihen von als Wechselplatten ausgebildeten Schleifsteinen am Lagerzapfen oder am Lagersitz zu befestigen. Auch mehrere Reihen von Schleifsteinen wären denkbar. Ebenfalls denkbar wäre es, das Werkzeug als eine Schleifschicht aus einem entsprechenden Schleifmittel, z.B. einem Korund oder einem Bornitrid vorzusehen, welche dann mittels der Befestigungseinrichtung wie ein Abschnitt einer Schleifscheibe an dem Lagerzapfen befestigbar wäre. Bei dem Werkzeug oder den Werkzeugen könnte es sich jedoch auch um Werkzeuge mit einer oder mehreren definierten Schneidkanten handeln (z.B. ein Drehmeißel oder eine Reibahle), wobei das Werkzeug bzw. die Werkzeuge dann ebenfalls als Wechsel- oder Wendeschneidplatte ausgebildet sein könnte(n).

Insbesondere beim Einsatz von derartigen als Wechsel- oder Wendeschneidplatten ausgebildeten Werkzeugen hat sich dabei eine als aufklebbare, flexible Matte ausgebildete Befestigungseinrichtung als besonders vorteilhaft erwiesen. Nach dem Freilegen des Lagerzapfens bzw. der Auflagefläche im Lagerdeckel kann die mit den Werkzeugen bestückte flexibe Matte dann einfach auf die Auflagefläche des Lagerzapfens aufgelegt und -geklebt werden oder entsprechend auf die Auflagefläche im Lagerdeckel.

Das Werkzeug oder im Fall von mehreren Werkzeugen die Werkzeuge müssen sich dabei nicht über die gesamte Breite der zu bearbeitenden Auflagefläche (in Axialrichtung der Welle) erstrecken. Vielmehr ist es auch möglich, die Auflagefläche Stück für Stück zu bearbeiten, indem nach Bearbeitung eines Abschnitts der Auflagefläche mit einer der Werkzeugbreite die Vorrichtung zunächst abgenommen wird und dann neben diesem Abschnitt entsprechenden Breite wieder an dem als Werkzeugträger fungierenden Lagerzapfen bzw. Lagerdeckel befestigt wird. Selbstverständlich kann auch ein Werkzeug mit einer über die gesamte zu bearbeitende Breite durchgehenden Schneidkante oder Schleiffläche vorgesehen sein, so dass die gesamte zu bearbeitende Breite in einem Vorgang ohne Versetzen des Werkzeugs bearbeitet werden kann.

Insgesamt hat es sich dabei als besonders vorteilhaft erwiesen, wenn die Welle an weiteren Lagern gelagert ist und an diesen Lagerstellen in gelagerten Zustand belassen wird, wenn die Bearbeitung der jeweiligen zylindrischen Auflagefläche durchgeführt wird. Denn dann können die weiteren Lagerstellen als Abstützung der Welle und somit des Werkzeugs beim Bearbeiten der jeweiligen zylindrischen Auflagefläche dienen.

Weitere vorteilhafte Ausführungsformen der Erfindung sollen anhand der beiliegenden Zeichnungen im Folgenden näher erläutert werden.

Es zeigen:
- Figur 1: eine stark schematisierte Darstellung einer an mehreren Lagerstellen rundgeführten Welle, wobei an einer Lagerstelle eine Vorrichtung zur Bearbeitung des Lagersattels gemäß der Erfindung eingesetzt ist und
- Figur 2: eine perspektivische Ansicht einer Ausführungsform einer erfindungsgemäßen Vorrichtung zur Bearbeitung eines Lagersattels.

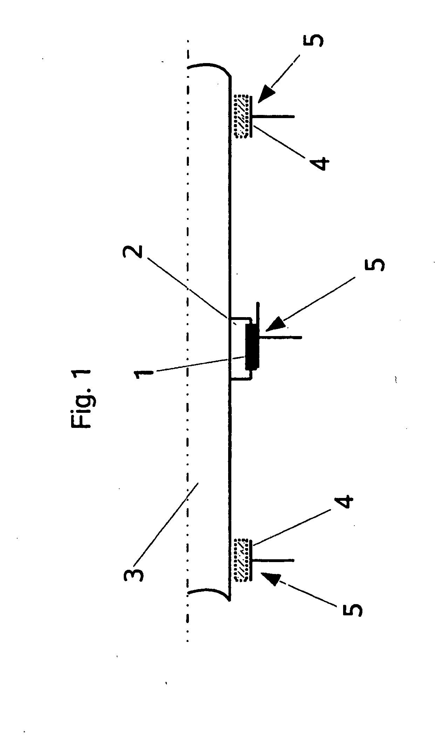

Zunächst wird Bezug genommen auf die Figur 1, welche in stark schematisierter Ansicht die Lagerung einer Welle 3 an mehreren Lagerstellen 5 darstellt. An der in der Figur linken und in der Figur rechten Lagerstelle 5 befindet sich die Welle 3 in einem über Lagerschalen 4 abgestützten Zustand, wohingegen an der in der Figur mittleren Lagerstelle 5 bzw. mittleren Lagersitz 5 eine Vorrichtung zur Bearbeitung des Lagersitzes 5, im dargestellten Fall der unteren Hälfte des Lagersitzes, d.h. des Lagersattels 5, auf die Welle 3 aufgebracht und daran befestigt ist. Die Vorrichtung weist dabei ein Werkzeug 1 auf, welches über eine Befestigungseinrichtung 2 an der Welle 3 bzw. an dem Lagerzapfen der Welle 3 des mittleren Lagers 4 befestigt ist.

Man erkennt, dass bei einer Drehung der Welle 3 und damit einer Bearbeitung des Lagersattels die beiden äußeren Lagerstellen 5 über die Lagerschalen 4 als Abstützung für die Welle 3 dienen, so dass mit hoher Präzision hinsichtlich der geforderten Konzentrität der Auflagefläche des mittleren Lagersitzes 5 gearbeitet werden kann. Weiterhin erkennt man, dass die Werkzeugbreite des Werkzeugs 1 kleiner ist als die Auflagefläche des mittleren Lagesitzes 5, so dass nach Bearbeitung eines ersten Breitenabschnitts der Auflagefläche des mittleren Lagersitzes mittels Drehen der Welle 3 ein Umbau der erfindungsgemäßen Vorrichtung erfolgen muss. Dazu wird die Welle 3 soweit gedreht, dass die Vorrichtung bei abgenommenen Lagerdeckel des mittleren Lagersitzes 5 zugänglich ist und die Vorrichtung soweit seitlich versetzt werden kann, dass das Werkzeug 1 den weiteren Breitenbereich der Auflagefläche des mittleren Lagersitzes 5 bearbeitet, wenn die Welle 3 wiederum soweit gedreht wird, dass das Werkzeug 1 den gesamten Bearbeitungsabschnitt durchläuft.

Im dargestellten Ausführungsbeispiel ist das Werkzeug 1 ein Grobbearbeitungsalso beispielsweise ein Schruppwerkzeug, wobei eine relativ kleine Werkzeugbreite und damit eine Werkzeugbreite, die kleiner als die Breite des Lagersattels ist, bevorzugt wird, um in einem ersten Schritt die zu bearbeitende Oberfläche auf mehrere Breitenabschnitte verteilt zu bearbeiten und dadurch die Schnittkräfte gering zu halten. Wenn die Breite des Lagersitzes jedoch hinreichend klein ist, dass keine zu großen Schnittkräfte entstehen, kann die zu bearbeitende Oberfläche auch auf ein Mal ohne Werkzeugumbau mit einem Werkzeug mit einer Breite größer oder gleich der Lagersattelbreite bearbeitet werden. Für eine Feinbearbeitung in einem zweiten Schritt könnte dann ein breiteres Feinbearbeitungs- also beispielsweise Schlichtwerkzeug - eingesetzt werden, um die zu bearbeitende Oberfläche zu polieren, um bei dann verringerten Schnittkräften eine ununterbrochene Oberfläche zu erzielen.

Auch eine Bearbeitung in mehreren Zügen wäre denkbar, beispielsweise um nach Drehung um einen bestimmten Winkel zunächst die entstandenen Späne zu entnehmen, bevor weitergearbeitet wird.

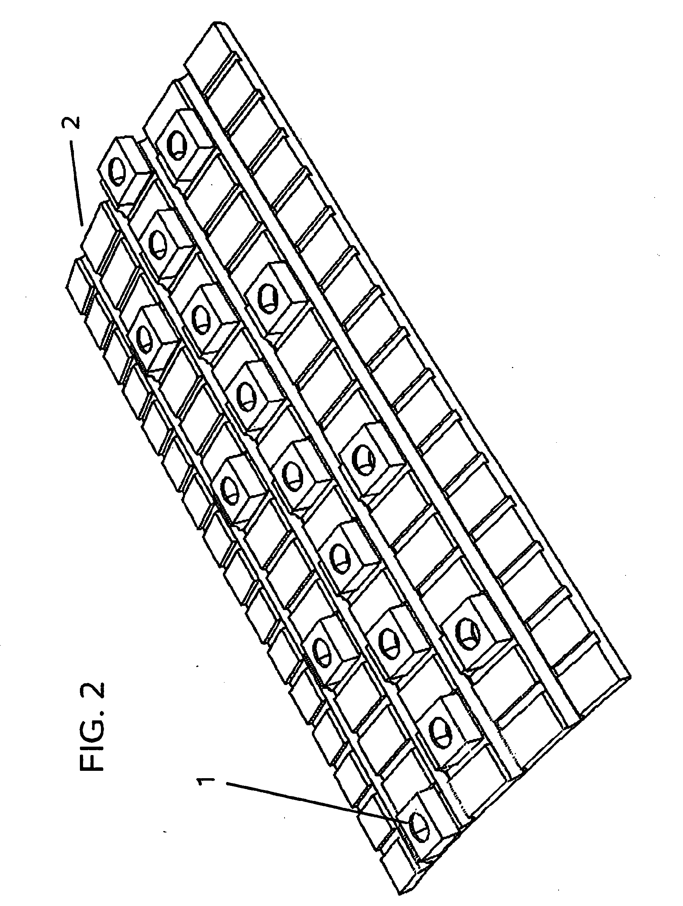

In Figur 2 ist eine mögliche Ausführungsform der erfindungsgemäßen Vorrichtung im Einzelnen dargestellt. Die Vorrichtung weist dabei drei Reihen von als Schleifsteinen ausgebildeten Werkzeugen 1 auf, welche auf einer Befestigungseinrichtung 2 aufgenommen sind, über welche sie auf die Welle 3 bzw. den Lagerzapfen des zu bearbeitenden Lagersitzes aufgeklebt werden können, in dem die Befestigungseinrichtung 2 auf ihrer den Werkzeugen 1 gegenüberliegenden Seite mit einer Klebeschicht versehen wird. Im dargestellten Ausführungsbeispiel ist die Befestigungseinrichtung 2 vorzugsweise als flexible Matte ausgebildet, welche eine Anzahl von frei konfigurierbaren Steckplätzen für die Werkzeuge 1 aufweist, welche somit je nach gewünschtem Bearbeitungsprofil auf die Befestigungseinrichtung 2 aufgesteckt werden können.

Selbstverständlich sind Abweichungen und Modifikationen von den gezeigten Ausführungsbeispielen möglich, ohne den Rahmen der Erfindung zu verlassen.

Insbesondere wäre es denkbar, die in Figur 2 gezeigte Vorrichtung mit einer als flexible Matte ausgebildeten Befestigungseinrichtung auf die Auflagefläche des Lagerdeckels des geteilten Lagersitzes aufzukleben und, nach Wiederaufsetzen des Lagerdeckels mit dem Werkzeug den Lagerzapfen zu bearbeiten, anstatt mit der in der Figur 2 eingezeichneten Krümmung der Befestigungseinrichtung zum Aufkleben derselben auf der Auflagefläche des Lagerzapfens die Auflagefläche des Lagersitzes. Ebenfalls wäre es denkbar, anstatt den Lagerdeckel als Werkzeugträger zur Bearbeitung des Lagerzapfens einzusetzen, die Vorrichtung an einem eigens dafür vorgesehenen Werkzeugträger zu befestigen und zur Bearbeitung des Lagerzapfens diesen separaten Werkzeugträger mitsamt der Vorrichtung anstatt des Lagerdeckels mit der aufgeklebten Vorrichtung aufzusetzen.

### Bezugszeichenliste

- 1: Werkzeug
- 2: Befestigungseinrichtung
- 3: rundgeführte Welle / Lagerzapfen
- 4: Lagerschale, bzw. Lager
- 5: Lagersitz, bzw. Lagerstelle

## Patentansprüche

1. Vorrichtung zur zumindest abschnittsweise erfolgenden, spanabhebenden Bearbeitung einer Auflagefläche eines Lagersitzes (5) einer rundgeführten Welle (3) bei ausgebautem Lager (4), insbesondere an einer mit Lagerschalen (4) gleitgelagerten Welle (3), wie beispielsweise einer Kurbelwelle eines Zweitakt-Großdieselmotors, **dadurch gekennzeichnet, dass**
die Vorrichtung zumindest ein in dem durch Ausbau des Lagers (4) entstandenen
Spalt zwischen dem Lagersitz (5) und einem darin aufgenommenen Lagerzapfen (3) entlang der Auflagefläche des Lagersitzes (5) gegenüber dem Lagersitz (5) drehbewegbares Schneidwerkzeug (1) aufweist, und dass
eine Befestigungseinrichtung (2) zum Befestigen des Schneidwerkzeugs (1) an dem Lagerzapfen (3) vorgesehen ist, die so eingerichtet ist, dass bei Bearbeitung der Auflagefläche des Lagersitzes (5) der Lagerzapfen (3) als rotierender Werkzeugträger dient und das Schneidwerkzeug (1) in einer rein rotatorischen Schnittbewegung an der Auflagefläche des Lagersitzes (5) entlang geführt wird, und dass
die Befestigungseinrichtung (2) zur rückstands- und zerstörungsfrei wieder lösbaren Befestigung des Schneidwerkzeugs (1) am Lagerzapfen (3) im Kraft- und/oder Stoffschluss eingerichtet ist und dazu eine Klebeschicht umfasst, um das Werkzeug (1) stoffschlüssig mit der Auflagefläche am Lagerzapfen (3) zu verbinden und/oder zumindest eine Schlauchschelle.

2. Vorrichtung zur zumindest abschnittsweise erfolgenden, spanabhebenden Bearbeitung einer Auflagefläche eines Lagerzapfens einer rundgeführten Welle bei ausgebautem Lager, insbesondere an einer mit Lagerschalen gleitgelagerten Welle, wie beispielsweise einer Kurbelwelle eines Zweitakt-Großdieselmotors, mit
zumindest einem in dem durch Ausbau des Lagers entstandenen Spalt zwischen einem Lagersitz und dem darin aufgenommenen Lagerzapfen entlang der Auflagefläche des Lagerzapfens gegenüber dem Lagerzapfen drehbewegbaren Schneidwerkzeug, und
einer Befestigungseinrichtung zum Befestigen des Schneidwerkzeugs an dem Lagersitz, die so eingerichtet ist, dass bei Bearbeitung der Auflagefläche des Lagerzapfens die Welle als Drehspindel dient und der Lagersitz als nichtrotierender Werkzeugträger, und das befestigte Schneidwerkzeug in einer rein rotatorischen Schnittbewegung an der Auflagefläche des gedrehten Lagerzapfens entlang geführt wird,
**dadurch gekennzeichnet, dass**
die Befestigungseinrichtung zur rückstands- und zerstörungsfrei wieder lösbaren Befestigung des Schneidwerkzeugs am Lagersitz im Kraft- und/oder Stoffschluss eingerichtet ist und dazu eine Klebeschicht umfasst, um das Werkzeug stoffschlüssig mit der Auflagefläche am Lagersitz zu verbinden und/oder zumindest eine Schlauchschelle.

3. Vorrichtung nach Anspruch 1 oder 2, **dadurch gekennzeichnet, dass** die Befestigungseinrichtung (2) zur Befestigung des Schneidwerkzeugs (1) an der der zu bearbeitenden Auflagefläche auf der anderen Seite des Spalts gegenüberliegenden Auflagefläche eingerichtet ist.

4. Vorrichtung nach Anspruch 1, 2 oder 3, **dadurch gekennzeichnet, dass** das Werkzeug eine Schleifschicht und/oder ein Schleifstein und/oder ein Drehmeißel, insbesondere ein Schlichtdrehmeißel oder eine Reibahle ist.

5. Vorrichtung nach einem der vorhergehenden Ansprüche, **dadurch gekennzeichnet, dass** das Werkzeug (1) eine Wechsel- oder Wendeschneidplatte (1) ist und die Befestigungseinrichtung (2) einen Werkzeughalter für das Werkzeug (1) umfasst.

6. Vorrichtung nach einem der vorhergehenden Ansprüche, **dadurch gekennzeichnet, dass** die Befestigungseinrichtung (2) als aufklebbare, flexible Matte (2) ausgebildet ist.

7. Vorrichtung nach einem der vorhergehenden Ansprüche, **dadurch gekennzeichnet, dass** eine Einstelleinrichtung zur Einstellung des Abstands des Werkzeugs von der zu bearbeitenden Auflagefläche vorgesehen ist.

8. Vorrichtung nach Anspruch 7, **dadurch gekennzeichnet, dass** die Einstelleinrichtung zumindest eine unter das Werkzeug einlegbare Distanzscheibe und/oder zumindest zwei austauschbare Werkzeuge unterschiedlicher Höhe und/oder zumindest einen verschiebbaren Stellkonus umfasst, mit dem die Lage des Werkzeughalters verstellbar ist.

9. Verfahren zur zumindest abschnittsweise erfolgenden, spanabhebenden Bearbeitung einer Auflagefläche eines Lagersitzes (5) einer rundgeführten Welle (3) oder eines Lagerzapfens der rundgeführten Welle, bei dem durch Ausbau des Lagers (4) ein Spalt zwischen dem Lagersitz (5) und dem darin aufgenommenen Lagerzapfen (3) geschaffen wird, insbesondere an einer mit Lagerschalen (4) gleitgelagerten Welle (3), wie beispielsweise einer Kurbelwelle eines Zweitakt-Großdieselmotors, **dadurch gekennzeichnet, dass** eine Vorrichtung nach einem der vorhergehenden Ansprüche zur Bearbeitung der Auflagefläche am Lagersitz (5) an dem Lagerzapfen (3) oder zur Bearbeitung der Auflagefläche am Lagerzapfen an dem Lagersitz befestigt wird und danach die Welle (3) gedreht wird.

10. Verfahren nach Anspruch 9, **dadurch gekennzeichnet, dass** die Welle (3) an weiteren Lagerstellen (5) in gelagertem Zustand gelassen wird, so dass die weiteren Lagerstellen (5) als Abstützung der Welle und somit des Werkzeugs beim Bearbeiten der zylindrischen Auflagefläche dienen.

11. Verfahren nach Anspruch 9 oder 10, **dadurch gekennzeichnet, dass** bei einem in einen Lagersattel und einen Lagerdeckel geteilten Lagersitz (5) der Lagerdeckel abgenommen wird, die Vorrichtung nach einem der Ansprüche 1 bis 8 an der dadurch zugänglich gemachten Seite der der zu bearbeitenden Auflagefläche gegenüberliegenden Auflagefläche befestigt wird.

12. Verfahren nach Anspruch 9, 10 oder 11, **dadurch gekennzeichnet, dass** zur Bearbeitung der Auflagefläche am Lagerzapfen die Vorrichtung nach einem der Ansprüche 1 bis 8 an der Auflagefläche am Lagerdeckel befestigt wird, und dann der Lagerdeckel wieder aufgesetzt wird, wobei der zur Bearbeitung der Auflagefläche am Lagerzapfen geeignete Abstand zwischen Lagerdeckel und Lagerzapfen durch Anziehen von Lagerbolzen eingestellt wird, mit denen die beiden Lagerhälften verspannbar sind.

13. Verfahren nach Anspruch 9, 10 oder 11, **dadurch gekennzeichnet, dass** zur Bearbeitung der Auflagefläche am Lagerdeckel die Vorrichtung nach einem der Ansprüche 1 bis 8 an der Auflagefläche am Lagerzapfen befestigt wird, und dann der Lagerdeckel wieder aufgesetzt wird, wobei der zur Bearbeitung der Auflagefläche am Lagerdeckel geeignete Abstand zwischen Lagerdeckel und Lagerzapfen durch Anziehen von Lagerbolzen eingestellt wird, mit denen die beiden Lagerhälften verspannbar sind.

14. Verfahren nach einem der Ansprüche 9 bis 13, **dadurch gekennzeichnet, dass** bei einem aus Zweihälften-Lagerschalen gebildeten Lager (4) lediglich eine Lagerschalenhälfte entnommen wird, um den Spalt zur Bearbeitung der Auflagefläche am Lagerzapfen oder am Lagersitz zu bilden.

15. Verfahren nach Anspruch 14, **dadurch gekennzeichnet, dass** zur Bearbeitung der Auflagefläche am Lagersattel lediglich die untere Lagerschalenhälfte entnommen wird.

## Claims

1. An apparatus for chip removal machining of at least a portion of a support face of a bearing seat (5) of a concentrically guided shaft (3) with the bearing (4) dismantled, in particular at a shaft supported in sliding fashion with bearing shells (4), such as a crankshaft of a large two-stroke diesel engine, **characterized in that** the apparatus having
at least one cutting tool (1), rotationally movable, relative to the bearing seat (5) along the support face of the bearing seat (5), in the gap, created by dismantling of the bearing (4), between the bearing seat (5) and a bearing journal (3) received in the bearing seat (5),
wherein
a securing device (2) for securing the cutting tool (1) to the bearing journal (3) is provided, which is arranged such that in machining of the support face of the bearing seat (5), the bearing journal (3) acts as a rotating tool holder, and the cutting tool (1) is guided in a purely rotational cutting motion along the support face of the bearing seat (5), and wherein
the securing device (2), for re-releasable securing of the cutting tool (1) on the bearing journal (3) in a manner free of residue and nondestructively, is arranged in force- and/or material-locking fashion and for that purpose includes an adhesive layer suitable for joining the tool (1) in material-locking fashion to the support face on the bearing journal (3), and/or at least one hose clamp.

2. An apparatus for chip removal machining of at least a portion of a support face of a bearing journal of a concentrically guided shaft with the bearing dismantled, in particular at a shaft supported in sliding fashion with bearing shells, such as a crankshaft of a large two-stroke diesel engine, having
at least one cutting tool, rotationally movable, relative to the bearing journal, along the support face of the bearing journal, in the gap, created by dismantling of the bearing, between a bearing seat and the bearing journal received in the bearing seat, and having
a securing device, for securing the cutting tool to the bearing seat, which device is arranged such that the shaft acts as a pivot spindle, and the bearing seat acts as a non-rotating tool holder, and the secured cutting tool is guided in a purely rotational cutting motion along the support face of the rotated bearing journal,
**characterized in that**
the securing device, for re-releasable securing of the cutting tool on the bearing seat in a manner free of residue and nondestructively, is arranged in force- and/or material-locking fashion and for that purpose includes an adhesive layer suitable for joining the tool in material-locking fashion to the support face on the bearing seat, and/or at least one hose clamp.

3. The apparatus as defined by claim 1 or 2, **characterized in that** the securing device (2) is arranged for securing the cutting tool (1) on the support face on the other side of the gap than and opposite of the support face to be machined.

4. The apparatus as defined by claim 1, 2 or 3, **characterized in that** the tool is an abrasive layer and/or a grindstone and/or a turning tool, in particular a finishing turning tool or a reamer.

5. The apparatus as defined by one of the foregoing claims, **characterized in that** the tool (1) is a replaceable or indexable cutting plate (1), and the securing device (2) includes a tool holder for the tool (1).

6. The apparatus as defined by one of the foregoing claims, **characterized in that** the securing device (2) is embodied as a flexible mat (2) that can be glued on.

7. The apparatus as defined by one of the foregoing claims, **characterized in that** an adjusting device is provided for adjusting the spacing of the tool from the support face to be machined.

8. The apparatus as defined by claim 7, **characterized in that** the adjusting device includes at least one shim that can be placed under the tool and/or at least two interchangeable tools of different heights and/or at least one displaceable adjusting cone, with which the position of the tool holder is adjustable.

9. A method for chip removal machining of at least a portion of a support face of a bearing seat (5) of a concentrically guided shaft (3) or of a bearing journal of the concentrically guided shaft, in particular on a shaft (3) supported in sliding fashion with bearing shells (4), such as a crankshaft of a large two-stroke diesel engine, wherein by dismantling the bearing (4), a gap between the bearing seat (5) and the bearing journal (3) received in it is created, **characterized in that** an apparatus as defined by one of the foregoing claims, for machining the support face on the bearing seat (5), is secured on the bearing journal (3) or, for machining the support face on the bearing journal, is secured on the bearing seat, and after that the shaft (3) is rotated.

10. The method as defined by claim 9, **characterized in that** the shaft (3) is left in the supported state at further bearing points (4), so that the further bearing points (4) serve as bracing of the shaft and thus of the tool in the machining of the cylindrical support face.

11. The method as defined by claim 9 or 10, **characterized in that** with a bearing seat (5) split into a bearing saddle and a bearing lid, the bearing lid is removed and the apparatus as defined by one of claims 1 through 8 is secured to the side, thus made accessible, of the support face opposite the support face to be machined.

12. The method as defined by claim 9, 10 or 11, **characterized in that** for machining the support face on the bearing journal, the apparatus as defined by one of claims 1 through 8 is secured to the support face on the bearing lid, and then the bearing lid is put back on, and the spacing between the bearing lid and the bearing journal suitable for machining the support face on the bearing journal is adjusted by tightening bearing bolts, with which the two bearing halves can be clamped.

13. The method as defined by claim 9, 10 or 11, **characterized in that** for machining the support face on the bearing lid, the apparatus as defined by one of claims 1 through 8 is secured to the support face on the bearing journal, and then the bearing lid is put back on, and the spacing between the bearing lid and the bearing journal suitable for machining the support face on the bearing lid is adjusted by tightening bearing bolts, with which the two bearing halves can be clamped.

14. The method as defined by one of claims 9 through 13, **characterized in that** in a bearing (4) formed of two-half bearing shells, only one bearing shell half is removed in order to form the gap for machining the support face on the bearing journal or on the bearing seat.

15. The method as defined by claim 14, **characterized in that** for machining the support face on the bearing saddle, only the lower bearing shell half is removed.

## Revendications

1. Dispositif pour l'usinage par enlèvement de copeaux, réalisé au moins par sections, d'une surface d'appui d'un siège de palier (5) d'un arbre (3) guidé en rond, lorsque le palier (4) est démonté, en particulier sur un arbre (3) logé à glissement par des coussinets de palier (4), tel que, par exemple, un vilebrequin d'un grand moteur diesel à deux temps,
**caractérisé par le fait**
**que** le dispositif présente au moins un outil de coupe (1) déplaçable en rotation dans la fente produite par le démontage du palier (4), entre le siège de palier (5) et un tourillon (3) reçu dans celui-ci, le long de ladite surface d'appui du siège de palier (5) par rapport au siège de palier (5), et
**que** l'on prévoit un dispositif de fixation (2) destiné à fixer ledit outil de coupe (1) sur le tourillon (3), qui est agencé de manière à ce que, lors de l'usinage de la surface d'appui du siège de palier (5), ledit tourillon (3) serve de porte-outil tournant et que l'outil de coupe (1) soit guidé en un mouvement de coupe purement rotatif le long de la surface d'appui du siège de palier (5), et
**que** ledit dispositif de fixation (2) est adapté pour fixer ledit outil de coupe (1) sur le tourillon (3) d'une manière amovible, par adhérence et/ou par liaison de matière, sans résidus ni destruction, et comprend, à cette fin, une couche de collage afin de relier par liaison de matière ledit outil (1) à la surface d'appui sur le tourillon (3), et/ou au moins un collier pour tuyau flexible.

2. Dispositif pour l'usinage par enlèvement de copeaux, réalisé au moins par sections, d'une surface d'appui d'un tourillon d'un arbre guidé en rond, lorsque le palier est démonté, en particulier sur un arbre logé à glissement par des coussinets de palier, tel que, par exemple, un vilebrequin d'un grand moteur diesel à deux temps, comprenant
au moins un outil de coupe déplaçable en rotation dans la fente produite par le démontage du palier, entre le siège de palier et le tourillon reçu dans celui-ci, le long de ladite surface d'appui du tourillon par rapport au tourillon, et
un dispositif de fixation destiné à fixer ledit outil de coupe sur le siège de palier, qui est agencé de manière à ce que, lors de l'usinage de la surface d'appui du tourillon, ledit arbre serve de broche de tournage et ledit siège de palier serve de porte-outil non tournant, et que ledit outil de coupe fixé soit guidé en un mouvement de coupe purement rotatif le long de la surface d'appui du tourillon tourné, et
**caractérisé par le fait que**
ledit dispositif de fixation (2) est adapté pour fixer ledit outil de coupe sur le siège de palier d'une manière amovible, par adhérence et/ou par liaison de matière, sans résidus ni destruction, et comprend, à cette fin, une couche de collage afin de relier par liaison de matière ledit outil à la surface d'appui sur le siège de palier, et/ou au moins un collier pour tuyau flexible.

3. Dispositif selon la revendication 1 ou 2, **caractérisé par le fait que** ledit dispositif de fixation (2) est adapté pour fixer ledit outil de coupe (1) sur la surface d'appui située en regard de la surface d'appui à usiner, de l'autre côté de la fente.

4. Dispositif selon la revendication 1, 2 ou 3, **caractérisé par le fait que** ledit outil est une couche de meulage et/ou une pierre de meulage et/ou un burin de tournage, en particulier un burin de tournage de finition ou un alésoir.

5. Dispositif selon l'une quelconque des revendications précédentes, **caractérisé par le fait que** ledit outil (1) est une plaquette échangeable ou réversible (1) et que le dispositif de fixation (2) comprend un porte-outil pour ledit outil (1).

6. Dispositif selon l'une quelconque des revendications précédentes, **caractérisé par le fait que** ledit dispositif de fixation (2) est réalisé en tant que tapis (2) flexible apte à collé.

7. Dispositif selon l'une quelconque des revendications précédentes, **caractérisé par le fait que** l'on prévoit un dispositif de réglage pour régler la distance séparant ledit outil et la surface d'appui à usiner.

8. Dispositif selon la revendication 7, **caractérisé par le fait que** ledit dispositif de réglage comprend au moins une rondelle d'écartement apte à être placée sous l'outil et/ou au moins deux outils échangeables de hauteur différente et/ou au moins un cône de réglage déplaçable par le biais duquel peut être réglée la position du porte-outil.

9. Procédé pour l'usinage par enlèvement de copeaux, réalisé au moins par sections, d'une surface d'appui d'un siège de palier (5) d'un arbre (3) guidé en rond ou d'un tourillon de l'arbre guidé en rond, dans lequel une fente est produite par le démontage du palier (4), entre le siège de palier (5) et le tourillon (3) reçu dans celui-ci, en particulier sur un arbre (3) logé à glissement par des coussinets de palier (4), tel que, par exemple, un vilebrequin d'un grand moteur diesel à deux temps, **caractérisé par le fait qu'**un dispositif selon l'une quelconque des revendications précédentes est fixé sur le tourillon (3) pour usiner la surface d'appui sur le siège de palier (5) ou sur le siège de palier pour usiner la surface d'appui sur le tourillon et que, ensuite, l'arbre (3) est tourné.

10. Procédé selon la revendication 9, **caractérisé par le fait que** ledit arbre (3) est laissé en état logé sur d'autres points de palier (5) de sorte que lesdits autres points de palier (5) servent d'appui de l'arbre et ainsi de l'outil lors de l'usinage de la surface d'appui cylindrique.

11. Procédé selon la revendication 9 ou 10, **caractérisé par le fait que**, dans le cas d'un siège de palier (5) divisé en une selle de palier et en un chapeau de palier, ledit chapeau de palier est enlevé, le dispositif selon l'une quelconque des revendications 1 à 8 est fixé sur la face rendue ainsi accessible, de la surface d'appui située en regard de la surface d'appui à usiner.

12. Procédé selon la revendication 9, 10 ou 11, **caractérisé par le fait que**, pour l'usinage de la surface d'appui sur le tourillon, le dispositif selon l'une quelconque des revendications 1 à 8 est fixé sur la surface d'appui sur le chapeau de palier et que, ensuite, le chapeau de palier est à nouveau placé, la distance séparant le chapeau de palier et le tourillon, qui est adaptée pour usiner la surface d'appui sur le tourillon, étant réglée en serrant des boulons de palier par l'intermédiaire desquels les deux parties du palier peuvent être serrées.

13. Procédé selon la revendication 9, 10 ou 11, **caractérisé par le fait que**, pour l'usinage de la surface d'appui sur le chapeau de palier, le dispositif selon l'une quelconque des revendications 1 à 8 est fixé sur la surface d'appui sur le tourillon et que, ensuite, le chapeau de palier est à nouveau placé, la distance séparant le chapeau de palier et le tourillon, qui est adaptée pour usiner la surface d'appui sur le chapeau de palier, étant réglée en serrant des boulons de palier par l'intermédiaire desquels les deux parties du palier peuvent être serrées.

14. Procédé selon l'une quelconque des revendications 9 à 13, **caractérisé par le fait que**, dans le cas d'un palier (4) constitué par des coussinets en deux parties, uniquement une partie de coussinet de palier est enlevée afin de former la fente pour l'usinage de la surface d'appui sur le tourillon ou sur le siège de palier.

15. Procédé selon la revendication 14, **caractérisé par le fait que**, pour l'usinage de la surface d'appui sur la selle de palier, uniquement la partie inférieure de coussinet de palier est enlevée.
